# EUROPÄISCHE PATENTSCHRIFT

(11) **EP 1 146 305 B1**
(45) Veröffentlichungstag und Bekanntmachung des Hinweises auf die Patenterteilung: **15.06.2005**
(21) Anmeldenummer: 00107720.5
(22) Anmeldetag: 11.04.2000
(51) Int. Cl.: F27B 9/02, F27B 9/30, F27B 9/40, F27D 21/00, C21D 9/00, F27B 9/36, B32B 31/00

(54) **Vorwärmtechnik mit Leistungsdrosselung bei Betriebsunterbrechungen**
Preheating method with reduction of power during the interruptions of the furnace operation
Technique de préchauffage avec réduction de la puissance pendant les interruptions de fonctionnement

(43) Veröffentlichungstag der Anmeldung: 17.10.2001
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- EP-A- 0 451 075
- EP-A- 0 472 906
- DE-A- 4 126 597
- GB-A- 493 184
- GB-A- 2 146 464
- US-A- 1 878 896
- US-A- 4 688 180

## Beschreibung

Diese Erfindung richtet sich auf das Erwärmen von Gegenständen in einem Heißluftdurchlaufofen. Die Gegenstände werden dabei mit einer Fördereinrichtung durch den Durchlaufofen transportiert, wobei am Ende des Ofens, also am Ende einer Förderstrecke, eine vorgegebene Prozeßtemperatur erreicht sein soll. Die Prozeßtemperatur ist durch einen weiteren die Gegenstände betreffenden Verarbeitungsschritt definiert, der nach dem Auslaufen der Gegenstände aus dem Durchlaufofen durchgeführt wird. Wenn zwischen dem Auslaufen der Gegenstände aus dem Durchlaufofen und diesem Verarbeitungsschritt noch mit einer Abkühlung der Gegenstände zu rechnen ist, so kann die Zielprozeßtemperatur am Ende des Durchlaufofens natürlich dementsprechend höher bemessen sein.

Davon ausgehend liegt der Erfindung das technische Problem zugrunde, ein verbessertes Verfahren zum Erwärmen von Gegenständen in einem Heißluftdurchlaufofen anzugeben.

Die Erfindung löst dieses technische Problem dadurch, daß der Heißluftdurchlaufofen in eine Mehrzahl von den Gegenständen durch die Fördereinrichtung durchfahrene Ofenzonen aufgeteilt ist und bei einer vorübergehenden Betriebsunterbrechung der Prozeßeinrichtung und damit verbundenem Stillstand der Fördereinrichtung jede Ofenzone mit in solcher Weise individuell verringerter Temperatur betrieben wird, daß in der Ofenzone befindliche Gegenstände im wesentlichen eine Zonenpausentemperatur beibehalten, die im wesentlichen der Temperatur eines Gegenstands in der jeweiligen Ofenzone im Normalbetrieb entspricht, so daß nach Wiederaufnahme des Normalbetriebs keine wesentliche Überhitzung von Gegenständen über die vorgegebene Prozeßtemperatur vorliegt.

Die Erfindung richtet sich nicht nur auf das Verfahren zum Erwärmen von Gegenständen, sondern auch auf den entsprechend ausgestalteten Heißluftdurchlaufofen selbst. Daher ist die folgende Beschreibung, einschließlich der Ausführungsbeispiele, sowohl implizit als auch explizit als Offenbarung von Merkmalen des Verfahrens wie des Durchlaufofens zu verstehen.

Die Erfinder haben erkannt, daß es bei Produktionsunterbrechungen, die durch andere, in demselben Produktionsstrang angeordnete Verfahrensschritte bedingt sein können, zu Störungen des den Durchlaufofen nachfolgenden Prozeßablaufs kommen kann, indem die Gegenstände durch die Verzögerung eine außerplanmäßig lange Zeit in dem Ofen verbringen und daher beim Austritt aus dem Ofen überhöhte Temperaturen aufweisen. Dem liegt der Umstand zugrunde, daß die Umgebungstemperatur des Ofens zur Erzielung vernünftiger Aufwärm- und Durchlaufzeiten deutlich über der beabsichtigten Prozeßtemperatur der Gegenstände beim Austritt aus dem Ofen liegt.

Zwar kann die Ofenleistung im Fall von Produktionsunterbrechungen gedrosselt werden, so daß die Gegenstände während der Unterbrechung in dem Ofen tatsächlich nicht wesentlich über die Prozeßtemperatur erwärmt werden, jedoch ergibt sich dabei das Problem, daß beim Wiederanfahren des Normalbetriebs und Wiedereinsetzen der Förderung der Gegenstände durch den Durchlaufofen die Ofenleistung und damit die Umgebungstemperatur im Ofen wieder erhöht werden muß, um für nachfolgende, erst in den Ofen einzufahrende Gegenstände wieder Normbedingungen zu schaffen, dabei jedoch die bereits im Ofen befindlichen Gegenstände, die noch eine gewisse Durchlaufstrecke vor sich haben, durch die Temperaturerhöhung letztlich doch zu warm aus dem Ofen austreten.

Wird die Ofentemperatur bei Produktionsunterbrechung zu stark gedrosselt, besteht andererseits die Gefahr, daß einige Gegenstände nach dem Wiederanfahren zu kalt bleiben.

Dokument EP 0 472 906 beschreibt ein Verfahren und einen Heißluftdurchlaufofen zum Erwärmung von Sandwichelementen aus Mehrkomponentenkunststoffur, bei welchem im Falle von Förderunterbrechung durch schnelles Abkühlen der Heizluft mittels bestimmter luftskömmgstechnischer Maßnahmen eine überhitzung der Gegenstände verhindert werden kann. Eine Zoneneinteilung des Ofens ist nicht vorgesehen.

Die Erfindung läst die erwähnten Probleme durch die Merkmale der Ansprüche 1 und 18. Der Ofen kann somit in nach Ofenzonen getrennter Weise mit individuell verringerter Temperatur betrieben werden, wobei in jeder Ofenzone im Unterbrechungsfall eine geeignete Zonenpausentemperatur der Gegenstände eingestellt wird, die der üblichen Temperatur eines Gegenstandes in der jeweiligen Ofenzone im Normalbetrieb einigermaßen entspricht. Durch zonenindividuelle Temperatur- bzw. Leistungsabsenkung kann also die dem Durchlaufstadium des jeweiligen Gegenstands in dem Heißluftdurchlaufofen entsprechende Gegenstandstemperatur in etwa gehalten werden, so daß beim Wiederaufheizen des Ofens beim Wiederanfahren des Normalbetriebs durch die noch zurückzulegende Durchlaufstrecke eine Aufheizung in etwa auf die gewünschte Prozeßtemperatur erreicht wird. Die Zahl der Ofenzonen und die Differenziertheit der Einstellung der jeweiligen Zonenpausentemperaturen muß dabei in einem geeigneten Kompromiß zwischen erforderlicher Temperaturdifferenz, Taktzeit, technischem Aufwand und Temperatursensibilität des von der Prozeßtemperatur beeinflußten nachfolgenden Verfahrensschritt gewählt werden. Es kann durchaus auch berücksichtigt werden, daß der Durchlaufofen nach dem Wiederanfahren des Normalbetriebs seine normalen Temperaturen nur mit gewisser Zeitverzögerung erreicht, so daß die Zonenpausentemperaturen dementsprechend etwas über den typischen Gegenstandstemperaturen in dieser Zone im Normalbetrieb liegen.

Die Ofenzonen sind nur durch die individuelle Temperaturverringerung definiert. Sie müssen nicht von jeweils benachbarten Ofenzonen getrennt sein. Außerdem ist es denkbar, die Ofenzonen kontinuierlich ineinander übergehen zu lassen, so daß sich kontinuierliche Temperaturverläufe zwischen Ofeneingang und Ofenausgang ergeben. Dann entspricht der Begriff der Ofenzone einer eher beliebigen diskreten Unterteilung eines tatsächlich kontinuierlichen Verlaufs.

Vorzugsweise richtet sich die Erfindung auf flache Gegenstände, beispielsweise Platten oder aus Platten und einem Rahmen aufgebaute einseitig offene Kassetten. Dabei sind auch kontinuierlich miteinander verbundene Gegenstände mit umfaßt. Es muß sich innerhalb des Ofens also nicht unbedingt um vereinzelte Gegenstände handeln, vielmehr können die Gegenstände auch Abschnitte eines durchgehenden Strangs sein. Ein wichtiger Gesichtspunkt der Erfindung liegt darin, daß der bislang allgemein umschriebene nachfolgende Prozeßschritt den Auftrag eines Schaummaterials, eines Klebstoffs oder einer zugehörigen Vorläuferflüssigkeit auf die Gegenstände beinhaltet. Dann bildet die Prozeßtemperatur eine wesentliche Bedingung für chemische Reaktionen oder Abbindvorgänge in dem betreffenden Material. Dies betrifft insbesondere die erwähnten Platten oder Kassetten, die zu Bauplatten, Sandwichelementen oder dergleichen weiterverarbeitet werden können.

Vorzugsweise können die Gegenstände nach Durchlauf durch den Ofen und Beschichtung mit dem Schaummaterial oder Klebstoff mit einer oberen Deckschicht verbunden und einer Doppelbandanlage zugeführt werden. Die durch den Durchlaufofen vorgegebene Vorwärmung bildet dann gemeinsam mit der Temperierung in der Doppelbandanlage die u. U. kritische thermische Basis für die Ausreaktion beispielsweise des Schaummaterials.

Im einfachsten Fall werden die Ofenzonen im Normalbetrieb gemeinsam geregelt. Dabei kann auch eine gemeinsame einheitliche Ofentemperatur eingestellt werden, wobei sich die durch den Ofen geförderten Gegenstände mit zunehmender Förderstrecke an diese Temperatur annähern.

Auch im Betriebsunterbrechungsfall können die Ofenzonen gemeinsam geregelt werden. Dabei sind die jeweiligen Zonenpausentemperaturen durch fest vorgegebene Leistungsdrosselungen im absoluten oder relativen Sinn gegenüber dem Normalbetriebszustand realisierbar. Die letzte Zone am Ofenausgang kann dabei im Normalbetriebszustand oder in dessen Nähe bleiben.

Um die Temperatur des Ofens schnell ändern zu können und im Sinne der Erfindung im Betriebsunterbrechungsfall schnell auf die Zonenpausentemperaturen absinken und nach der Betriebsunterbrechung wieder auf Normaltemperatur hochfahren zu können, ist ein Heißluftofen mit drahtförmigen Heizelementen mit geringer Wärmekapazität bevorzugt. Dabei bietet sich eine zusätzliche Möglichkeit, die schnelle Temperaturabsenkung am Beginn der Betriebsunterbrechung zu realisieren, indem von einem Umluftbetrieb auf die Zufuhr äußerer Frischluft umgeschaltet wird. Dies wird bei der Beschreibung des Ausführungsbeispiels näher erläutert. Eine schnelle Aufheizung nach der Betriebsunterbrechung ist im wesentlichen eine Frage der Leistungsauslegung der Heizelemente.

Wenn die in der beschriebenen Weise unterteilte Fördereinrichtung eine Riemenfördereinrichtung ist, so können durch Prallbleche in etwaigen Lücken zwischen den einzelnen Teilen zusammen mit den Förderriemen durch eine relativ geschlossene Gesamtoberfläche der Fördereinrichtung unabhängig von etwaigen Lücken zwischen den geförderten Gegenständen günstige Strömungsverhältnisse für einen Heißluftheizbetrieb hergestellt werden, bei dem die Heizluft über den Gegenständen entlanggeführt wird. Durch die relativ geschlossene Oberfläche der Fördereinrichtung werden die Strömungsverhältnisse dann durch das Auftreten von Lücken zwischen den Gegenständen nicht so stark verändert.

Um eine Zuordnung der einzelnen Gegenstände zu den Zonen zu erleichtern, kann ein Taktbetrieb der Förderung durch den Durchlaufofen vorteilhaft sein. Dieser Taktbetrieb ist dabei durch den Zonenabständen entsprechende Taktförderstrecken auf die Zoneneinteilung angepaßt. Ferner kann der Taktbetrieb auf den Taktbetrieb einer nachfolgenden Einrichtung, beispielsweise der erwähnten Beschäumstation abgestimmt sein.

Für den Taktbetrieb ist es günstig, wenn die Fördereinrichtung in zumindest zwei Segmente aufgeteilt ist, wobei ein Segment der letzten Ofenzone entspricht, und das andere Segment die letzte Ofenzone nicht beinhaltet. Durch eine Lichtschranke in der ersten Ofenzone und vorzugsweise am Ende des vordersten Segments der Fördereinrichtung kann dann eine günstige Steuerung des Taktbetriebs erfolgen, die auch auf Lücken zwischen den Gegenständen Rücksicht nehmen kann. Einzelheiten hierzu sind bei dem Ausführungsbeispiel erklärt.

Die Regelung des Durchlaufofens kann in günstiger Weise mit einem Infrarotsensor innerhalb des Durchlaufofens kurz vor dem Ofenausgang erfolgen, der die Temperatur der auslaufenden Gegenstände ermittelt und dem Regelkreis als Istwert liefert. Zusätzlich wird bei Betriebsunterbrechung vorzugsweise ein Temperaturfühler zur Ermittlung der Temperatur der Heizluft verwendet, um einen weiteren Istwert für die Regelung der Lufttemperatur zu erhalten, auf den während den Betriebsunterbrechungen umgeschaltet wird. Insbesondere beim Erwärmen vereinzelter Gegenstände, zwischen denen bei der Förderung durch den Durchlaufofen Lücken auftreten, ist es weiterhin sinnvoll, die Regelung anhand des durch den Infrarotsensor gelieferten Istwerts in den Normalbetriebsphasen auszuschalten, in denen der Infrarotsensor keinen Gegenstand, sondern beispielsweise eine Lücke zwischen zwei aufeinanderfolgenden Gegenständen oder auch eine Lücke wegen eines in der Förderreihe fehlenden Gegenstandes erfaßt. Im einfachsten Fall wird dann die vor dem Auftreten der Lücke verwendete Heizleistung konstant gehalten. Dadurch kann der Regelungsbetrieb vor der Lücke ohne zu große Sprünge mit dem Regelungsbetrieb nach der Lücke verbunden werden.

Zu weiteren Ausführungsformen wird auf die Ansprüche 15 - 17 verwiesen.

Das folgende Ausführungsbeispiel verdeutlicht die Erfindung in weiteren Einzelheiten. Dabei offenbarte Einzelmerkmale können auch in anderen als den dargestellten Kombinationen erfindungswesentlich sein. Im einzelnen zeigt:
Fig. 1 eine Draufsicht auf einen Teil einer Produktionsanlage für Sandwichelemente nach dem erfindungsgemäßen Verfahren;
Fig. 2 eine schematische Prinzipdarstellung eines erfindungsgemäßen Heißluftdurchlaufofens in der Produktionsanlage aus Fig. 1 im Schnitt;
Fig. 3 eine Fig. 2 entsprechende Darstellung, jedoch in einem Pausenzustand des Heißluftdurchlaufofens;
Fig. 4 eine Prinzipdarstellung zur Luftführung in dem Heißluftdurchlaufofen aus den Fig. 2 und 3;
und Fig. 5 eine weitere Prinzipdarstellung zur Luftführung in dem Durchlaufofen.

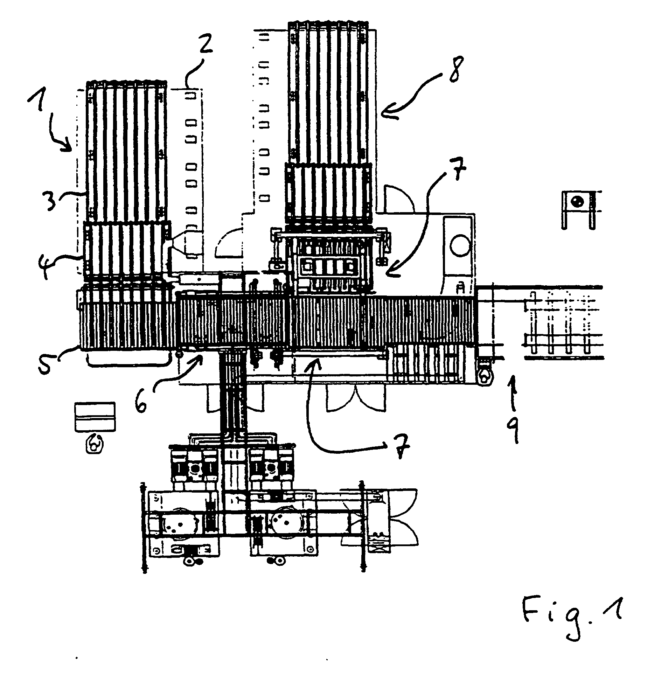

Fig. 1 zeigt eine Draufsicht auf einen Teil einer Produktionsanlage für Sandwichelemente. Dabei handelt es sich um Türelemente in Sandwichbauweise aus zwei plattenartigen Deckschichten, die von einem Rahmen im Außenbereich verbunden sind, wobei innerhalb des durch die Deckschichten und des Rahmens gebildeten Volumens ein PUR/PIR-Schaum als Füllung eingebracht ist.

In Fig. 1 ist mit 1 summarisch ein erfindungsgemäßer Durchlaufofen bezeichnet, wobei Fig. 1 lediglich einen Außenumriß des Ofengehäuses 2, und darin eine in ein erstes Segment 3 und ein zweites Segment 4 aufgeteilte Riemenfördereinrichtung zeigt.

In den Durchlaufofen 2 werden durch eine nicht näher dargestellte Vorrichtung vorgefertigte Kassetten geladen, die aus der bereits mit dem Rahmen verbundenen Unterschale des zukünftigen Sandwichelements bestehen. Weil die Kassetten vereinzelt transportiert und verarbeitet werden, kann die erfindungsgemäße Produktionsanlage auch eine "bunte Reihe" verschiedener Kassettentypen verarbeiten.

Diese Kassetten werden als flache Gegenstände im Sinn der Erfindung in dem Durchlaufofen 1 auf eine vorgegebene Prozeßtemperatur erwärmt, die in Fig. 1 am unteren Ende am Ofenauslauf erreicht werden soll. Dort übergibt das zweite Segment 4 der Fördereinrichtung die Kassette auf eine in Querrichtung dazu arbeitende Rollenfördereinrichtung 5, und zwar mit Hilfe einer im Bereich der Rollenfördereinrichtung 5 zwischen die Rollen eingreifenden weiteren Riemenfördereinrichtung, also in einer sogenannte Winkelstation. Die Rollenfördereinrichtung führt die vorgewärmte Kassette in den Bereich einer hier nur kursorisch dargestellten Beschäumungsstation 6, in der die Kassetten mit einem zu dem PUR/PIR-Schaum ausreagierenden Raktionsgemisch aus einer Doppelportalanlage mit zwei Rezirkulationsmischköpfen beschickt wird. Die durch den Durchlaufofen 1 erzeugte Prozeßtemperatur der Kassette ist wichtig für den Start der Reaktion des Reaktionsgemischs zu dem PUR/PIR-Schaum und daher durch die hier verwendeten Materialienzusammensetzungen und durch den Wärmeverlust der Kassette auf dem Weg von dem Durchlaufofen 1 zu der Beschäumstation 6 vorgegeben. Zu Einzelheiten des Beschäumverfahrens und der Beschäumstation 6 wird auf eine separate Anmeldung derselben Anmelderin vom gleichen Anmeldetag mit dem Titel "Schaumauftrag mit zweidimensional verfahrbarer Auftragsvorrichtung" verwiesen, deren Offenbarungsgehalt hier mit inbegriffen ist. Wesentlich dabei ist die zweidimensionale Verfahrbarkeit der Auftragsvorrichtungen an den doppelt ausgeführten Portalen der Beschäumstation, wodurch optimierte Prozeßabläufe für den Beschäumvorgang möglich sind.

Aus der Beschäumstation 6 werden die beschäumten Kassetten mit Hilfe der Rollenfördereinrichtung 5 weitergefahren in den Bereich einer automatischen Einklipsvorrichtung 7 mit einem Vakuumsaugwagen. Auch diese Einklipsvorrichtung 7 soll hier nur kursorisch dargestellt werden, Einzelheiten hierzu finden sich ebenfalls in einer Parallelanmeldung derselben Anmelderin vom selben Anmeldetag mit dem Titel "Maschinelles Verklipsen von Sandwichelementen", wobei auch deren Offenbarungsgehalt hiermit in Bezug genommen ist. In dieser automatischen Einklipsvorrichtung 7 werden mit dem Vakuumsaugwagen in einem weiteren Durchlaufofen 8 vorgewärmte Deckschichtenelemente auf die mit dem Reaktionsgemisch gefüllte Kassette aufgeklipst, wobei die automatische Einklipsvorrichtung die Deckschicht zunächst schräg hält, um eine Rasteinrichtung auf einer Seite zwischen Kassette und oberer Deckschicht in Eingriff zu bringen, und danach durch ein Geradeanlegen der oberen Deckschicht gegen die Kassette eine weitere Rasteinrichtung auf der anderen Seite einklipst.

Der zweite Durchlaufofen 8 entspricht in seinem inneren Aufbau dem ersten Durchlaufofen 1 und wird nicht separat erläutert. Auch die Prozeßtemperatur der oberen Deckschicht ist für einen störungsfreien Ablauf der Ausreaktion des PUR/PIR-Schaums wichtig. Natürlich kann die Prozeßtemperatur, die durch den zweiten Durchlaufofen 8 eingestellt wird, von der Prozeßtemperatur des ersten Durchlaufofens 1 abweichen. Ferner ist es im Rahmen der Erfindung auch denkbar, daß nur einer der beiden Durchlauföfen 1 und 8 erfindungsgemäß ausgestaltet ist, wenn man zu dem Schluß kommt, daß beispielsweise die Temperatur der oberen Deckschicht nicht ganz so kritisch wie die Temperatur der Kassette ist.

Von der automatischen Einklipsvorrichtung 7 aus fährt das nunmehr geschlossene Sandwichelement über die Rollenfördereinrichtung weiter in eine hier nur schematisch angedeutete konventionelle Doppelbandanlage 9 ein. In der Doppelbandanlage 9 reagiert das PUR/PIR-Schaummaterial vollständig aus, wobei durch die Doppelbandanlage 9 der Abstand der beiden Deckschichten und damit die Stärke des fertigen Sandwichelements justiert wird. Ferner sorgt die Doppelbandanlage 9 für eine geeignete Temperierung; die Vorwärmung der Kassette und der oberen Deckschicht in den Durchlauföfen 1 und 8, eine Temperierung des aus den Rezirkulationsmischköpfen austretenden Reaktionsgemischs und schließlich die Temperierung der Doppelbandanlage 9 sind also miteinander für einen ungestörten Prozeßablauf wichtig.

In der Vergangenheit kam es bei Verwendung konventioneller Durchlauföfen bei durch einen Teil der hier ausschnittsweise dargestellten komplexen Produktionsanlage verursachten vorübergehenden Betriebsunterbrechungen zu Schwierigkeiten mit der Temperaturkontrolle nach Wiederaufnahme des Betriebs der Produktionsanlage. Dies lag zum einen an einer Überhitzung der ersten unmittelbar nach der Betriebsunterbrechung aus den Durchlauföfen 1 und 8 auslaufenden Kassetten oder oberen Deckschichten und zum zweiten in störenden Einschwingvorgängen der Ofentemperaturregelungen infolge dessen.

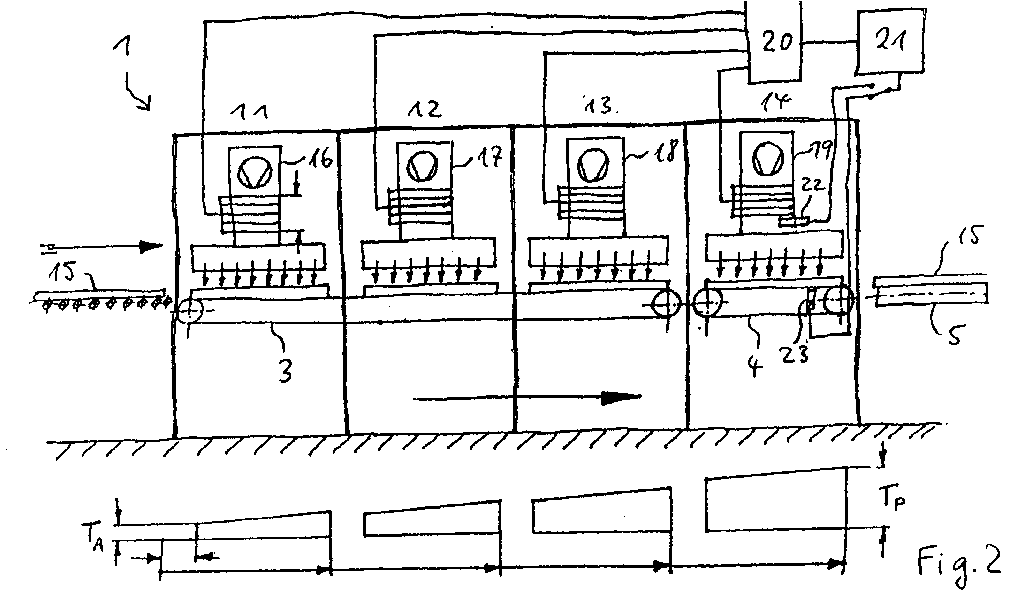

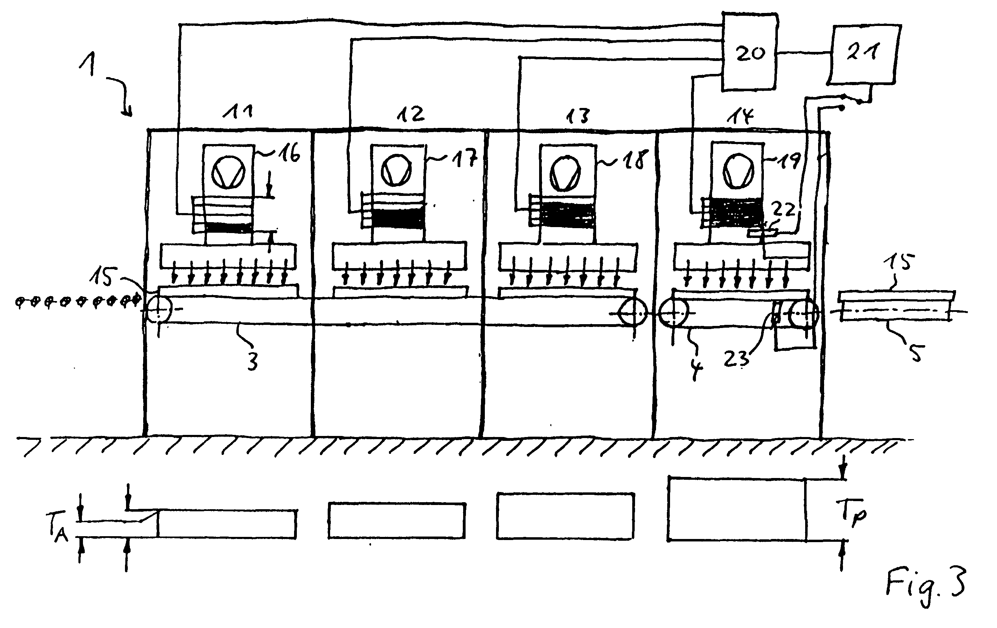

Erfindungsgemäß ist nun eine Zonenaufteilung innerhalb der Durchlauföfen vorgesehen, die nun beispielhaft für den Durchlaufofen 1 in den Fig. 2 und 3 erläutert wird.

Fig. 2 zeigt den Durchlaufofen 1 in schematischer Darstellung, die als Längsschnitt entlang der Förderrichtung 3, 4 aufgefaßt werden kann, im Normalbetrieb. Im unteren Bereich der Fig. 2 ist dabei schematisch der Temperaturverlauf durch den Durchlaufofen 1 hindurchfahrender Kassetten 15 dargestellt. Zunächst ist zu erkennen, daß der Durchlaufofen 1 in vier Ofenzonen 11 - 14 aufgeteilt ist. Im linken Bereich der Figur werden die hier nur schematisch dargestellten Kassetten 15 über eine nicht näher interessierende Rollenfördereinrichtung in den Ofen 1 eingefahren und verlassen den Ofen an seinem entgegengesetzten Ende zu der ebenfalls nur schematisch dargestellten Rollenfördereinrichtung 5 hin. Die drei ersten Ofenzonen 11 - 13 werden dabei von dem bereits in Fig. 1 dargestellten ersten Segment 3 der Riemenfördereinrichtung des Durchlaufofens durchfahren, während die letzte Ofenzone 14 einem zweiten Segment 4 der Fördereinrichtung entspricht.

Jede Ofenzone 11 - 14 weist ein eigenes Heißluftheizregister 16 - 19 auf. Die Heizregister 16 - 19 weisen jeweils drahtförmige Heizelemente auf, die elektrisch betrieben werden, wobei bei diesem Beispiel pro Heizregister 16 -19 Leistungen bis 20 kW einstellbar sind. Die Einstellung der Heizleistung der jeweiligen Heizregister 16 - 19 erfolgt durch ein gemeinsames Stellglied 20, das von einem einzigen Regler (PID-Regler) 21 angesteuert wird. Der Regler 21 verfügt über einen einstellbaren Sollwerteingang und erhält seinen Istwert wahlweise von einem Lufttemperaturmesser 22 oder einem pyrometrischen Infrarotsensor 23. Der pyrometrische Infrarotsensor 23 ist praktisch am Ofenausgang angeordnet und mißt direkt die Temperatur einer auslaufenden Kassette 15.

Im Normalbetrieb werden alle vier Ofenzonen 11 - 14, d.h. alle Heizregister 16- 19 mit untereinander identischer Heizleistung betrieben, d.h. das Stellglied unterscheidet nicht zwischen den einzelnen Ofenzonen 11 - 14. Dabei regelt der Regler 21 auf einen Sollwert für die tatsächliche Temperatur auslaufender Kassetten 15, die von dem Infrarotsensor 23 erfaßt wird. In den Zeitphasen, in denen sich gerade keine Kassette 15 über dem Infrarotsensor 23 befindet, wird auf Konstanthaltung der zuvor eingestellten Heizleistung umgeschaltet, um das Regelsystem stabil zu halten.

Ferner ist vorgesehen, bei einem Herauslaufen des Istwerts der Temperatur aus einem einstellbaren Toleranzband eine Alarmmeldung auszugeben.

Der untere Bereich der Fig. 2 verdeutlicht, daß sich von einer Anfangstemperatur T_{A} am Ofeneinlauf ausgehend eine Erwärmung der Kassetten 15 auf eine Prozeßtemperatur T_{P} am Ofenausgang ergibt. Beispielsweise kann die Ausgangstemperatur T_{A} 18° C betragen, während die Prozeßtemperatur (Sollwert) T_{P} 50 ° C betragen kann. Durch die über die Länge der Förderstrecke durch den Durchlaufofen 1 im wesentlichen homogene Heizung der Kassetten ergibt sich ein angenähert linearer Anstieg der Kassettentemperatur von T_{A} zu T_{P} über die vier Zonen 11 - 14. Im Grunde verhält sich der Durchlaufofen 1 in diesem Normalbetriebszustand so, als würde er, wie im konventionellen Fall, nur eine Ofenzone mit einheitlicher Regelung über die gesamte Länge enthalten.

Bevor auf die mit den horizontalen Pfeilen im unteren Bereich der Fig. 2 symbolisierte taktweise Förderung der Kassetten 15 durch den Durchlaufofen 1 näher eingegangen wird, wird zunächst der Betrieb des Durchlaufofens 1 im Pausenbetriebszustand, d.h. bei vorübergehenden Betriebsunterbrechungen der Produktionsanlage beschrieben, wozu auf Fig. 3 verwiesen wird. Fig. 3 entspricht der Darstellung in Fig. 2. Es wird jedoch von einer Situation ausgegangen, in der die Kassetten 15 von der Rollenfördereinrichtung 5 nicht weitertransportiert werden können, so daß auch die Fördereinrichtung 3,4 stillstehen muß. Somit befinden sich in den Ofenzonen 11 - 14 über die Zeit der Betriebsunterbrechung jeweils Kassetten 15, die demzufolge in dem in Fig. 2 dargestellten Betriebszustand überhöhte Temperaturen annehmen würden. Daher schaltet das Stellglied 20 die vier Heizregister 16 - 19 auf abgestufte Leistungen um. Dies geschieht bei diesem Ausführungsbeispiel dadurch, daß in den Drahtheizelementen der Heizregister einzelne Heizregisterunterblöcke weggeschaltet werden. Jedes Heizregister verfügt über vier solche Unterblöcke, so daß die Heizregister 16- 19 in dieser Reihenfolge mit einem, zwei, drei bzw. vier Unterblöcken betrieben werden können. Dadurch heizen die Heizregister im Verhältnis zueinander mit einer relativen Heizleistung von 25 %, 50 %, 75 % bzw. 100 %. Dabei sind die Stufen jeweils natürlich regelbar, d.h. 5 kW entspricht der maximalen Leistung.

Dabei wird weiterhin als Istwerteingang für den PID-Regler 21 die durch den Lufttemperatursensor 22 erfaßte Lufttemperatur verwendet, so daß die Lufttemperatur in der letzten Ofenzone 14 der angestrebten Prozeßtemperatur T_{P} entspricht. Daher wird sich die in dieser Zone 14 befindliche Kassette 15 nicht über diese Temperatur T_{P} hinaus erwärmen. Durch die Abstufung der Heizleistung in den anderen drei Zonen werden dort jeweils Kassettentemperaturen "eingefroren", die annäherungsweise den in Fig. 2 dargestellten Temperaturen im Normalbetriebsdurchlauf an dieser Stelle entsprechen.

Somit kann bei Wiederaufnahme des Normalbetriebs - ausreichende Heizleistung und geringe Trägheit des Systems vorausgesetzt - praktisch unmittelbar wieder an den normalen Temperaturverlauf angeschlossen werden, weil die Kassetten 15 sich jeweils auf der Temperatur befinden, die sie auch im Normalbetrieb an dieser Stelle hätten. Durch einen weiteren Durchlauf durch den Durchlaufofen können Sie also nicht zu stark erwärmt werden.

Die gestuften Temperaturen in den einzelnen Ofenzonen 11 - 14 sind im unteren Bereich der Fig. 3 dargestellt und entsprechen bei diesem Beispiel einer Aufteilung in vier äquidistante Schritte zwischen (auschließlich) T_{A} und (einschließlich) T_{P}. Man beachte dabei, daß bereits die erste Ofenzone 11 eine höhere Temperatur als T_{A} hat.

Bei diesem Ausführungsbeispiel wird durch die äquidistante Unterteilung eine relativ einfache Anpassung an den Normalbetriebstemperaturverlauf vorgenommen, die jedoch für praktische Anwendungen in der Regel ausreicht. Insbesondere lassen sich damit Einzelregelkreise für die einzelnen Ofenzonen vermeiden. Natürlich können die Heizregister auch in feiner aufgeteilte oder nicht äquielistante Stufen geschaltet werden. Jedoch hat sich herausgestellt, daß durch die Verwendung der jeweils am Ende jeder Zone (vergleiche Darstellung in Fig. 2) erzielten Temperatur, also beispielsweise der Temperatur T_{P} als Endtemperatur der Zone 14, unter Berücksichtigung der Tatsache, daß sich die Kassetten 15 aber jeweils mitten in der Zone befinden, auf die kurze Hochlaufzeit des Heizsystems nach der Aufnahme des Normalbetriebs Rücksicht genommen werden kann.

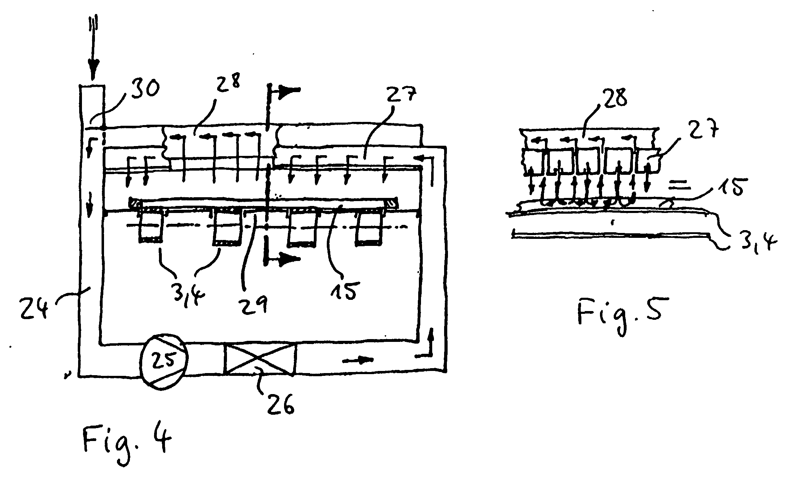

Um andererseits - mit Rücksicht auf eine nur kurzzeitige Betriebsunterbrechung - eine Überhitzung durch zu langsames Absenken der Ofenzonentemperaturen auf die jeweiligen Zonenpausentemperatur zu vermeiden, wird, wie gesagt, mit einer Heißluftheizung mit sehr trägheitsarmen drahtförmigen Heizregistem gearbeitet. Einzelheiten hierzu zeigen die Fig. 4 und 5. Und zwar zeigt Fig. 4 einen Umluftkanal 24 mit einem Gebläse 25 und dem in 4 Stufen à 5kW schaltbaren Heizregister 26

Im oberen Bereich der Fig. 4 erkennt man eine Kassette 15 auf der Riemenfördereinrichtung 3, 4. Der Umluftkanal 24 führt die durch das Heizregister 26 geheizte Luft durch in Fig. 5 in dem in Fig. 4 angedeuteten Schnitt besser erkennbare Austrittsöffnungen in Zuluftkanälen 27 auf die Kassette 15 hinab, und zwar mit so hoher Geschwindigkeit, daß die Heißluftströmung keine wesentlichen Grenzschichten auf der Kassette 15 zuläßt und somit für einen guten Wärmeübergang sorgt. Die von der Kassette 15 abprallende Luft wird zwischen den Austrittsöffnungen der Zuluftkanäle 27 in einen Abluftkanal 28 abgeführt, der die Luft wiederum über den Umluftkanal 24 zu dem Heizregister 26 führt.

Um diesen Luftzirkulationsmechanismus zu stabilisieren, sind zwischen den einzelnen Riemen der Riemenfördereinrichtung 3, 4, wie in Fig. 4 angedeutet, und auch zwischen dem einen Segment 3 und dem anderen Segment 4 der Fördereinrichtung Prallbleche 29 vorgesehen, so daß sich die Luftströmungsverhältnisse in den Phasen zwischen den Kassetten 15 nicht wesentlich ändern.

Wie Fig. 4 zeigt, ist in der Frischluftzufuhr eine Klappe 30 vorgesehen, die tatsächlich auch die Form eines Satzes lamellenähnlicher Luftklappen haben kann. Am Beginn einer Betriebsunterbrechung kann diese Klappe 30 in die in Fig. 4 gestrichelt angedeutete Stellung überführt werden, in der das Gebläse 25 statt der warmen Abluft aus den Ablaufkanälen 28 direkt kühle Frischluft von außen ansaugt. Gleichzeitig werden die Heizregister 26 abgeschaltet bzw. soweit leistungsreduziert, daß die jeweils notwendige Haltetemperatur erreicht wird. Dadurch kann die Atmosphäre über den Kassetten 15 relativ schnell abgekühlt werden. Natürlich kann die Klappe 30, wenn eine ausreichende Abkühlung stattgefunden hat, auch wieder in die in Fig. 4 durchgezogen dargestellte Position zurückgeschaltet werden. Es sind im übrigen auch Zwischenpositionen der Klappe 30 denkbar (auch im Normalbetrieb kann die Klappe 30 einen gewissen Frischluftanteil definieren, um aus den Kassetten 15 austretende brennbare Gase unter einer bestimmten Konzentration zu halten). Die durch die Frischluftzufuhr zusätzlich eingeführte Luftmenge entströmt der Anlage an anderer Stelle, im wesentlichen an den mit Vorhängen abgeschlossenen Ein- und Ausgängen der Öfen. In einer hinsichtlich der Luftzuführung zu den Kassetten 15 aufwendigeren Variante findet sich dieses Luftzuführungsverfahren im Heizbetrieb in der europäischen Patentschrift 0 472 906 B.1.

Der Transport der Kassetten 15 durch den Durchlaufofen 1 erfolgt in folgender Weise mit einem festen Takt, wobei beispielhaft von einem 12 Sekunden-Takt ausgegangen wird. Das erste Segment 3 der Fördereinrichtung übernimmt die Kassetten 15 von der dem Ofeneinlauf vorgeschalteten Rollenfördereinrichtung mit einer Geschwindigkeit von 21 m/min. und übergibt im Übergang von dem dritten Segment 13 zum vierten Segment 14 die Kassetten 15 mit einer Geschwindigkeit von 21 m/min. auf das zweite Segment 4 der Fördereinrichtung. Das zweite Segment übergibt die Kassetten wiederum mit 60 m/Min, an die aus der im Zusammenhang mit Fig. 1 erwähnten weiteren Riemenfördereinrichtung und der Rollenfördereinrichtung 5 gebildete Winkelstation.

Dabei werden die Kassetten 15 in einem Taktbetrieb transportiert, der auf die größtmögliche Kassettenausdehnung 15 in Durchlaufrichtung des Ofens 1 ausgelegt ist. Es können dabei aber durchaus unterschiedliche Kassetten 15 "in bunter Reihe" transportiert und vorgewärmt werden, weil es ja bei diesem Ausführungsbeispiel um das Vorwärmen vereinzelter Kassetten geht. Bezüglich des Erfindungsaspekts der Verarbeitung von vereinzelten Kassetten, d.h. der Vereinzelung der Kassetten oder Herstellung von vorneherein vereinzelter Kassetten vor dem Vorwärmen und dem Schaummaterialeintrag, wird auf eine weitere Parallelanmeldung derselben Anmelderin vom selben Anmeldetag verwiesen: "Herstellung schaumgefüllter Sandwichelemente mit Schaumauftrag in Kassetten", deren diesbezüglicher Offenbarungsgehalt hier mit inbegriffen ist.

Vor dem Einlauf des Durchlaufofens 1, also noch vor dem ersten Segment 11, ist eine erste Lichtschranke angebracht, die anzeigt, daß Kassetten 15 zum Einlauf bereit liegen. Beim Befüllen des leeren Durchlaufofens 1 löst diese Lichtschranke einen Förderbetrieb des ersten Fördereinrichtungssegments 3 aus. Damit werden von der dem Ofeneinlauf vorgeschalteten Rollenfördereinrichtung aus Kassetten in den Durchlaufofen 1 eingefahren und von dem Fördereinrichtungssegment 3 soweit weiterbewegt, bis eine zweite Lichtschranke am Ende des ersten Segments 11 anspricht, bei der Sender und Empfänger wärmegeschützt angeordnet sind. Dann hat die betreffende Kassette 15 ihre Position in der ersten Zone 11 erreicht. Die Heizleistungen der Heizaggregate 16 - 19 sind so dimensioniert, daß am Ende des Durchlaufofens 1 die gewünschte Prozeßtemperatur T_{P} erreicht wird, wenn ein Takt von 12 Sekunden pro Ofenzone eingehalten wird. Daher muß eine die Transportbewegungen zwischen den Zonen und beim Einlauf berücksichtigende Zeit als Ruhezeit pro Zone eingestellt werden, nach der das Fördereinrichtungssegment 3 wieder in Betrieb gesetzt wird, um die Kassette 15 von der Zone 11 in die Zone 12 zu bewegen. Dabei wird eine weitere Kassette in die erste Zone 11 eingefahren, bis diese wiederum die Lichtschranke erreicht. Durch eine entsprechende Abstimmung mit der Ansteuerung der dem Einlauf des Ofens 1 vorgeschalteten Rollenfördereinrichtung werden dabei die richtigen Abstände zwischen den Kassetten 15 für den Weitertransport vorgegeben, d.h. die in den Fig. 2 und 3 zwischen den Kassetten in den Zonen 11 - 14 erkennbaren Abstände. In dieser Weise wird der gesamte Durchlaufofen 1 mit vier Kassetten 15 befüllt.

Dieser Betrieb läuft so weiter, bis die erste Kassette 15 die Beschäumstation 6 erreicht. Dann wird der weitere Takt mit, im Normalbetrieb, dem gleichen 12-Sekunden-Rhythmus, von der Beschäumstation 6 vorgegeben. Dies erfolgt dadurch, daß der Transport durch die Beschäumstation 6 die Funktionen der Winkelstation zwischen der Beschäumstation 6 und dem Durchlaufofen 1 steuert, wobei der Transport durch diese wiederum das zweite Segment 4 der Fördereinrichtung in dem Durchlaufofen 1 steuert. Daraus ergibt sich wiederum der Betrieb des ersten Fördereinrichtungssegments 3 in dem Durchlaufofen. Dabei ist im übrigen die in den Fig. 2 und 3 erkennbare Lücke zwischen den Segmenten 3 und 4 der Fördereinrichtung ausreichend groß, damit das Ausfahren der Kassette 15 in der vierten Zone 14 zu den Winkelstationen mit 60 m/min. abgeschlossen ist, bevor die mit 21 m/min. nachfolgende Kassette 15 aus der dritten Zone 13 das Fördereinrichtungssegment 4 erreicht.

Es kann dabei auch vorkommen, daß am Ofeneinlauf keine Kassette 15 vorhanden ist, also eine Lücke in der Reihe der Kassetten gebildet wird. Dann läuft die Anlage im Prinzip unverändert weiter, wobei die Beschäumstation 6 an der oder den Lücken ihren Betrieb aussetzt. Wenn an der Beschäumstation 6 keine Kassetten 15 vorliegen, kann sie den Takt der Gesamtanlage nicht mehr steuern, so daß wieder auf die Taktvorgabe durch die Lichtschranke am Ende des ersten Segments 11 des Durchlaufofens 1 zurückgeschaltet wird. Sobald die Beschäumstation 6 wieder von Kassetten 15 erreicht wird, ist die Taktvorgabe durch die Beschäumstation 6 vorrangig. In jedem Fall werden bei Lücken entsprechende Meldungen für das Bedienungspersonal erzeugt.

Die Steuerung der Fördereinrichtung 3, 4 in dem ersten Durchlaufofen 1 ist dabei mit einer Steuerung einer analogen Fördereinrichtung in dem zweiten Durchlaufofen 8 in der Weise gekoppelt, daß in dem Durchlaufofen 8 mit einer passenden Verzögerung ebenfalls Lücken zu den im Durchlaufofen 1 auftretenden Lücken gebildet werden, damit nicht an der automatischen Einklipsvorrichtung 7 obere Deckschichten 35 ankommen, zu denen die Kassette 15 fehlt. Taktführend sind immer die Kassetten 15, d.h. abhängig von ihrem Transport werden die zugehörigen oberen Deckschichten 35 gestartet. Sollte andererseits eine obere Deckschicht 35 fehlen bzw. eine Lücke auftreten, wird die zugehörige Kassette 15 nicht beschäumt, jedoch bis vor den Einlauf der Doppelbandanlage 9 transportiert, um davor über eine hier nicht näher interessierende Einrichtung aus der Transportreihe entnommen zu werden (nämlich im Sinne der Fig. 1 vor der Doppelbandanlage 9 unten). Die ausgeschleuste Kassette 15 kann vom Bedienpersonal wieder in den Durchlaufofen 1 eingeschleust werden. Ist jedoch beim Arbeitsbeginn am Einlauf des Durchlaufofens 8 keine obere Deckschicht 35 vorhanden, so wartet die erste Kassette 15 vor dem Durchlaufofen 1 das Vorliegen einer oberen Deckschicht 35 ab, bevor sie in den Durchlaufofen 1 einfährt.

Bei dem vorstehend beschriebenen Ausführungsbeispiel werden über den zweiten Durchlaufofen 8 bereits vereinzelte Stücke der oberen Deckschicht zugeführt. Es ist jedoch auch möglich, mit einem kontinuierlichen "Coil" des für die obere Deckschicht verwendeten Blechs zu arbeiten. Dabei muß die Durchlauf- und Verarbeitungsrichtung des Coils der Durchlaufrichtung der Doppelbandanlage entsprechen. Es ist ferner nicht notwendig, daß die Kassetten 15 und die oberen Deckschichtstücke jeweils seitlich zu der Fördereinrichtung 5, die zu der Doppelbandanlage 9 führt, zugeführt werden. Beispielsweise könnte der Durchlaufofen 1 und/oder der zweite Durchlaufofen 8 auch in Reihe mit der Fördereinrichtung 5 in gleicher Richtung aufgebaut sein. Bei dem zweiten Durchlaufofen 8 könnte dabei ein über der Fördereinrichtung 5 angeordnetes zweites Stockwerk verwendet werden. Im einzelnen hängt dies auch von den am Einsatzort gegebenen räumlichen Verhältnissen ab.

## Patentansprüche

1. Verfahren zum Erwärmen von Gegenständen (15) auf eine vorgegebene Prozeßtemperatur T_{P} in einem Heißluftdurchlaufofen (1), durch den die Gegenstände (15) über eine Ofenstrecke mit Hilfe einer Fördereinrichtung (3, 4) gefördert und durch erhitzte Luft erwärmt werden, wobei die Prozeßtemperatur T_{P} am Ende der Förderstrecke erreicht wird, so daß die Gegenstände in einer dem Heißluftdurchlaufofen nachfolgenden Prozeßeinrichtung (6, 7, 9) weiterverarbeitet werden können,
**dadurch gekennzeichnet, daß** der Heißluftdurchlaufofen (1) in eine Mehrzahl von den Gegenständen (15) durch die Fördereinrichtung (3, 4) durchfahrene Ofenzonen (11 - 14) aufgeteilt ist und bei einer vorübergehenden Betriebsunterbrechung der Prozeßeinrichtung (6, 7, 9) und damit verbundenem Stillstand der Fördereinrichtung (3, 4) jede Ofenzone (11 - 14) mit in solcher Weise individuell verringerter Temperatur betrieben wird, daß in der Ofenzone (11 - 14) befindliche Gegenstände (15) im wesentlichen eine Zonenpausentemperatur beibehalten, die im wesentlichen der Temperatur eines Gegenstands (15) in der jeweiligen Ofenzone (11 - 14) im Normalbetrieb außerhalb der Betriebsunterbrechung entspricht,
so daß nach Wiederaufnahme des Normalbetriebs nach der Betriebsunterbrechung keine wesentliche Überhitzung von Gegenständen (15) über die vorgegebene Prozeßtemperatur T_{P} vorliegt.

2. Verfahren nach Anspruch 1, bei dem die Gegenstände Platten oder eine Platte und einen Rahmen aufweisende einseitig offene Kassetten (15) sind.

3. Verfahren nach Anspruch 1 oder 2, bei dem die nachfolgende Prozeßeinrichtung (6) die Gegenstände (15) mit einem Schaummaterial, einem Klebstoff oder einer Vorläuferflüssigkeit dazu beschichtet.

4. Verfahren nach Anspruch 2 und 3, bei dem die nachfolgende Prozeßeinrichtung (6, 7) die Gegenstände (15) nach der Beschichtung mit einer oberen Deckschicht verbindet und einer Doppelbandanlage (9) zuführt.

5. Verfahren nach einem der vorstehenden Ansprüche, bei dem die Ofenzonen (11 - 14) im Normalbetrieb gemeinsam geregelt werden.

6. Verfahren nach einem der vorstehenden Ansprüche, bei dem die Ofenzonen (11 - 14) während der Betriebsunterbrechung gemeinsam geregelt werden, wobei die jeweiligen Zonenpausentemperaturen durch eine fest vorgegebene Leistungsdrosselung in den jeweiligen Zonen gegenüber dem Normalbetriebszustand erreicht werden.

7. Verfahren nach einem der vorstehenden Ansprüche, bei dem der Heißluftdurchlaufofen (1) drahtförmige Heizelemente aufweist.

8. Verfahren nach einem der vorstehenden Ansprüche, bei dem eine schnelle Absenkung der Temperaturen in den Zonen auf die jeweilige Zonenpausentemperatur unterstützt wird durch ein luftströmungstechnisches Umschalten auf äußere Frischluft.

9. Verfahren nach einem der vorstehenden Ansprüche, bei dem die Fördereinrichtung (3, 4) in einer auf die Zoneneinteilung (11 - 14) des Heißluftdurchlaufofens (1) abgestimmten Weise getaktet betrieben wird.

10. Verfahren nach einem der vorstehenden Ansprüche, bei dem die Fördereinrichtung zumindest in ein vorderes Segment (3) ohne die letzte Zone (14) und ein der letzten Zone (14) entsprechendes Segment (4) unterteilt ist und an dem Ende der ersten Zone (11) eine Lichtschranke vorgesehen ist.

11. Verfahren nach Anspruch 10, bei dem die Fördereinrichtung (3, 4) eine Riemenfördereinrichtung mit zumindest einem Prallblech (29) in zumindest einer Lücke zwischen den Teilen der Fördereinrichtung (3, 4) ist.

12. Verfahren nach einem der vorstehenden Ansprüche, bei dem an dem Ausgang und innerhalb des Heißluftdurchlaufofens (1) ein Infrarotsensor (23) zur Ermittlung eines Istwerts für einen Regler (21) des Heißluftdurchlaufofens verwendet wird.

13. Verfahren nach Anspruch 12, bei dem ein Heizlufttemperaturfühler (22) einen zweiten Istwert für eine Regelung der Lufttemperatur auf die Prozeßtemperatur T_{P} in der letzten Zone (14) des Heißluftdurchlaufofens (1) während der Betriebsunterbrechung liefert.

14. Verfahren nach Anspruch 12 oder 13, bei dem der Heißluftdurchlaufofen (1) in Phasen des Normalbetriebs, in denen der Infrarotsensor (23) keinen Gegenstand (15) erfaßt, mit konstanter Heizleistung betrieben wird.

15. Verfahren nach den Ansprüchen 2, 3 und 4, auch in Verbindung mit weiteren vorstehenden Ansprüchen, bei dem eine Auftragsvorrichtung der nachfolgenden Prozeßeinrichtung (6, 7) bei der Beschichtung mit dem Schaummaterial oder der Vorläuferflüssigkeit eine Austrittsöffnung zweidimensional bewegt, wobei eine Richtung einer Förderrichtung der Kassette (15) und die andere Richtung einer Querrichtung dazu entspricht.

16. Verfahren nach den Ansprüchen 2, 3 und 4, auch in Verbindung mit weiteren vorstehenden Ansprüchen, bei dem das Schaummaterial oder die Vorläuferflüssigkeit aus einer Auftragsvorrichtung der nachfolgenden Prozeßeinrichtung (6, 7) in die Kassette (15) aufgebracht wird, wobei die Kassette (15) vor dem Aufbringen des Schaummaterials oder der Vorläuferflüssigkeit vereinzelt ist.

17. Verfahren nach den Ansprüchen 2, 3 und 4, auch in Verbindung mit weiteren vorstehenden Ansprüchen, bei dem das Schaummaterial oder die Vorläuferflüssigkeit aus einer Auftragsvorrichtung der nachfolgenden Prozeßeinrichtung (6, 7) in die Kassette (15) aufgebracht wird, wonach Rasteinrichtungen zumindest einer der Deckschichten und des Rahmens an zumindest zwei entgegengesetzten Außenkanten des aus den Deckschichten und dem Rahmen mit der Füllung gebildeten Sandwichelements in Eingriff gebracht werden, so daß der Rahmen und die Deckschicht verbunden sind, wobei die Rasteinrichtungen durch eine automatische Einklipsvorrichtung (7) maschinell in Eingriff gebracht werden und die automatische Einklipsvorrichtung (7) unter relativer Schräglage der Deckschicht und des Rahmens zunächst die Rasteinrichtung auf einer der beiden Seiten in Eingriff bringt und danach unter Aufrechterhaltung dieses Eingriffs die Schräglage in eine Anlage überführt, wobei bei Herstellung der Anlage die Rasteinrichtung auf der anderen der beiden Seiten in Eingriff gebracht wird.

18. Heißluftdurchlaufofen (1) mit einer Fördereinrichtung (3, 4) zur Förderung von Gegenständen (15) entlang einer Ofenstrecke durch den Heißluftdurchlaufofen (1) zum Erwärmen der Gegenstände (15) auf eine Prozeßtemperatur T_{P} mit Hilfe erhitzter Luft,
**dadurch gekennzeichnet, daß** der Heißluftdurchlaufofen (1) in eine Mehrzahl von den Gegenständen (15) durch die Fördereinrichtung (3, 4) durchfahrbare Ofenzonen (11 - 14) aufgeteilt ist, die bei einer vorübergehenden Betriebsunterbrechung und **dadurch** verbundenem Stillstand der Fördereinrichtung (3, 4) mit in solcher Weise individuell verringerter Temperatur betreibbar sind, daß in der Ofenzone (11 - 14) befindliche Gegenstände (15) im wesentlichen eine Zonenpausentemperatur beibehalten, die im wesentlichen der Temperatur eines Gegenstandes (15) in der jeweiligen Ofenzone (11 - 14) im Normalbetrieb außerhalb der Betriebsunterbrechung entspricht,
so daß nach Wiederaufnahme des Normalbetriebs nach der Betriebsunterbrechung keine wesentliche Überhitzung von Gegenständen (15) über die vorgegebene Prozeßtemperatur T_{P} vorliegt.

19. Heißluftdurchlaufofen (1) nach Anspruch 18, der für ein Verfahren nach einem der Ansprüche 2 - 17 ausgelegt ist.

## Claims

1. A method for heating objects (15) to a given process temperature T_{P} in a hot air continuous furnace (1), through which said objects (15) are conveyed along a furnace distance by means of a conveyor (3, 4) and are heated by heated air so that said process temperature T_{P} is reached at the end of said conveyor distance so that said objects can be processed in a processing device (6, 7, 9) succeeding said hot air continuous furnace,
**characterized in that**
said hot air continuous furnace (1) is divided into a plurality of furnace zones (11-14) passed by said objects (15) via said conveyor (3, 4) and wherein each furnace zone (11-14), during a temporary interruption of operation of said processing device (6, 7, 9) and resulting stopping of said conveyor (3,4), is operated with a temperature individually reduced in such manner that objects (15) in said furnace zone (11-14) maintain essentially a zone interruption temperature essentially corresponding to the temperature of an object (15) in said respective furnace zone (11-14) during normal operation in the absence of said interruption of operation
so that after resume of normal operation, after said interruption of operation, there is no substantial overheating of said objects (15) over said given process temperature T_{P}.

2. The method according to claim 1, in which said objects are boards or on one side open cassettes (15) comprising a board and a frame.

3. The method according to claim 1 or 2, in which said succeeding processing device (6) coats said objects (15) with a foam material, an adhesive or a precursor liquid therefor.

4. The method according to claim 2 and 3, in which said succeeding processing device (6, 7) connects said objects (15) after said coating with an upper cover layer und conveys them to a double band press (9).

5. The method according to one of the preceding claims, in which said furnace zones (11-14) are commonly controlled during normal operation.

6. The method according to one of the preceding claims, in which said furnace zones (11-14) are commonly controlled during said interruption of operation, wherein said respective zone interruption temperatures are reached by a predetermined fixed power reduction, compared to normal operation, within said respective zones.

7. The method according to one of the preceding claims, in which said hot air continuous furnace (1) comprises wire like heating devices.

8. The method according to one of the preceding claims, in which a fast reduction of the temperatures within said zones to said respective zone interruption temperature is supported by an air-flow switching to external fresh air.

9. The method according to one of the preceding claims, in which said conveyor (3, 4) is operated in a clocked manner adapted to the division of zones (11 - 14) of said hot air continuous furnace (1).

10. The method according to one of the preceding claims, in which said conveyor is divided into at least an initial segment (3) without said last zone (14) and a segment (4) corresponding to said last zone (14) and comprises a light barrier at the end of said first zone (11).

11. The method according to claim 10, in which said conveyor (3, 4) is a belt transporting device with at least one baffle plate (29) in at least one gap between the parts of said conveyor (3, 4).

12. The method according to one of the preceding claims, in which an infrared sensor (23) is used at the outlet and within said hot air continuous furnace (1) for determining an actual value for a feed-back controller (21) of said hot air continuous furnace.

13. The method according to claim 12, in which a hot-air-temperature sensor (22) provides a second actual value during interruption of operation for feed-back controlling the air temperature to said process temperature T_{P} within said last zone (14) of said hot air continuous furnace (1).

14. The method according to claim 12 or 13, in which said hot air continuous furnace (1) is operated with constant heating power during phases of normal operation wherein said infrared sensor (23) does not detect any object (15).

15. The method according to claim 2, 3 and 4, also in combination with further preceding claims, in which an application device of said succeeding processing device (6, 7) two-dimensionally moves a discharge orifice while coating with said foam material or said precursor liquid therefor, wherein one direction corresponds to a conveying direction of said cassette (15) and the other direction corresponds to a transversal direction thereto.

16. The method according to claim 2, 3 and 4, also in combination with further preceding claims, in which said foam material or said precursor liquid therefor are applied from an application device of said succeeding processing device (6, 7) into said cassette (15), wherein said cassette (15) is singled before said application of said foam material or said precursor liquid therefor.

17. The method according to claim 2, 3 and 4, also in combination with other preceding claims, in which said foam material or said precursor liquid therefor is applied from an application device of said succeeding processing device (6, 7) into said cassette (15), whereupon latch means of at least one of said cover layers and said frame are engaged at at least two opposed outer edges of a sandwich element formed of said cover layers and said frame with said filling so that said frame and said cover layer are connected, wherein said latch means are engaged automatically by an automatic clipping device (7) and said automatic clipping device (7) engages primarily said latch means at one of both sides, said cover layer and said frame being mutually inclined therein, and thereafter transforms said inclination into an abutment while maintaining said engagement, wherein in achieving said abutment said latch means on the other of both sides is engaged.

18. A hot air continuous furnace (1) comprising a conveyor (3, 4) for conveying objects (15) along a furnace distance through said hot air continuous furnace (1) for heating objects (15) to a process temperature T_{P} by means of heated air,
**characterized in that** said hot air continuous furnace (1) is divided into a plurality of furnace zones (11-14) passed by said objects (15) via said conveyor (3, 4) which furnace zones (11 - 14), during a temporary interruption of operation and resulting stopping of said conveyor (3,4) are operated with a temperature individually reduced in such manner that objects (15) in said furnace zone (11-14) maintain essentially a zone interruption temperature essentially corresponding to the temperature of an object (15) in a respective furnace zone during normal operation
so that after resume of normal operation after said interruption of operation there is no substantial overheating of said objects (15) over said given process temperature Tₚ.

19. The hot air continuous furnace (1) according to claim 18 being adapted for carrying-out a method according to one of claims 2 to17.

## Revendications

1. Procédé de chauffage d'objets (15) à une température de processus T_{P} prédéterminée dans un four de recuit continu à air chaud (1), à travers lequel les objets (15) sont transportés sur une section de four à l'aide d'un dispositif de transport (3,4) et sont chauffés par de l'air chaud, moyennant quoi la température de processus Tp est atteinte à l'extrémité de la section de four, de telle sorte que les objets puissent être soumis à un traitement ultérieur dans un dispositif de traitement (6,7,9) consécutif au four de recuit continu à air chaud,
**caractérisé en ce que** le four de recuit continu à air chaud (1) est divisé en une pluralité de zones de four (11-14) traversées par les objets (15) au moyen du dispositif de transport (3,4) et, en cas d'une interruption provisoire de fonctionnement du dispositif de processus (6,7,9) et d'un arrêt lié du dispositif de transport (3,4), chaque zone de four (11-14) est exploitée à une température diminuée individuellement de telle sorte que les objets (15) se trouvant dans la zone de four (11-14) conservent essentiellement une température de pause de zone, laquelle correspond essentiellement à la température d'un objet (15) dans la zone de four respective (11-14) en fonctionnement normal en dehors de l'interruption de fonctionnement,
de telle sorte qu'après la reprise du fonctionnement normal après l'interruption de fonctionnement, aucune surchauffe essentielle des objets (15) au dessus de la température de processus T_{P} prédéterminée ne se produise.

2. Procédé selon la revendication 1, dans lequel les objets sont des plaques ou une plaque et des cassettes (15) ouvertes d'un côté, présentant un châssis.

3. Procédé selon la revendication 1 ou 2, dans lequel le dispositif de processus (6) suivant effectue un revêtement des objets (15) avec un matériau alvéolaire, une colle ou un liquide précurseur.

4. Procédé selon la revendication 2 et 3, dans lequel le dispositif de processus (6,7) suivant relie les objets (15) à une couche finale supérieure après le revêtement et les introduit dans une installation à double bande (9).

5. Procédé selon une des revendications précédentes, dans lequel les zones de four (11-14) peuvent être réglées conjointement en fonctionnement normal.

6. Procédé selon une des revendications précédentes, dans lequel les zones de four (11-14) sont réglées conjointement pendant l'interruption de fonctionnement, moyennant quoi les températures de pauses de zones respectives sont atteintes au moyen d'une réduction de la puissance prédéterminée de manière fixe dans les zones respectives par rapport à l'état de fonctionnement normal.

7. Procédé selon une des revendications précédentes, dans lequel le four de recuit continu à air chaud (1) présente des éléments chauffants en forme de fils.

8. Procédé selon une des revendications précédentes, dans lequel une réduction rapide des températures dans les zones à la température de pause de zone respective est entreprise au moyen d'une commutation sur l'air frais extérieur dans le système d'écoulement d'air.

9. Procédé selon une des revendications précédentes, dans lequel le dispositif de transport (3,4) est exploité d'une manière synchronisée adaptée à la division des zones (11-14) du four de recuit continu à air chaud (1).

10. Procédé selon une des revendications précédentes, dans lequel le dispositif de transport est subdivisé en au moins un segment avant (3) sans la dernière zone (14) et un segment (4) correspondant à la dernière zone (14) et un dispositif photoélectrique est prévu à l'extrémité de la première zone (11).

11. Procédé selon la revendication 10, dans lequel le dispositif de transport (3,4) est un dispositif de transport à courroie comportant au moins une chicane (29) dans au moins un espace vide entre les parties du dispositif de transport (3,4).

12. Procédé selon une des revendications précédentes, dans lequel, à la sortie et à l'intérieur du four de recuit continu à air chaud (1), un capteur infrarouge (23) est utilisé pour déterminer une valeur effective pour un dispositif de régulation (21) du four de recuit continu à air chaud.

13. Procédé selon la revendication 12, dans lequel un capteur de température d'air chaud (22) délivre une deuxième valeur effective pour une régulation de la température d'air à une température de processus T_{P} dans la dernière zone (14) du four de recuit continu à air chaud (1) pendant l'interruption de fonctionnement.

14. Procédé selon la revendication 12 ou 13, dans lequel le four de recuit continu à air chaud (1) en phase de fonctionnement normal, pendant laquelle le capteur infrarouge (23) ne détecte aucun objet (15), est exploité à une puissance de chauffage constante.

15. Procédé selon les revendications 2,3 et 4, également en liaison avec d'autres revendications précédentes, dans lequel un dispositif d'application du dispositif de processus suivant (6,7) déplace en deux dimensions une ouverture de sortie lors du revêtement avec le matériau alvéolaire ou le liquide précurseur, moyennant quoi une direction correspond à une direction de transport de la cassette (15) et l'autre direction correspond à une direction transversale.

16. Procédé selon les revendications 2,3 et 4, également en liaison avec d'autres revendications précédentes, dans lequel le matériau alvéolaire ou le liquide précurseur est déposé d'un dispositif d'application du dispositif de processus suivant (6,7) dans la cassette (15), moyennant quoi la cassette (15) est isolée avant l'application du matériau alvéolaire ou du liquide précurseur.

17. Procédé selon les revendications 2,3 et 4, également en liaison avec d'autres revendications précédentes, dans lequel le matériau alvéolaire ou le liquide précurseur est déposé d'un dispositif d'application du dispositif de processus suivant (6,7) dans la casette (15), après quoi des dispositifs de verrouillage d'au moins une des couches finales et du châssis sont amenées en contact sur au moins deux arêtes extérieures opposées de l'élément en sandwich formé par les couches finales et le châssis avec la matière de charge, de telle sorte que la châssis et la couche finale soient reliés, moyennant quoi les dispositifs de verrouillage sont amenés en contact mécaniquement par un dispositif d'encliquetage automatique (7) et le dispositif d'encliquetage automatique (7) amène ensuite en contact par une inclinaison relative de la couche finale et du châssis le dispositif de verrouillage sur un des deux côtés et, en maintenant ensuite ce contact, l'inclinaison est transférée dans une installation, moyennant quoi, lors de la fabrication de l'installation, le dispositif de verrouillage est amené en contact sur l'autre des deux côtés.

18. Four de recuit continu à air chaud (1) comportant un dispositif de transport (3,4) pour transporter des objets (15) le long d'une section de four à travers le four de recuit continu à air chaud (1) afin de chauffer les objets (15) à une température de processus T_{P} à l'aide de l'air chauffé,
**caractérisé en ce que** le four de recuit continu à air chaud (1) est divisé en une pluralité de zones de four (11-14) traversées par les objets (15) au moyen du dispositif de transport (3,4), lesquelles sont exploitables, lors d'une interruption de fonctionnement provisoire et de l'arrêt en conséquence du dispositif de transport (3,4) à une température diminuée individuellement de telle manière que les objets (15) se trouvant dans les zones de four (11-14) conservent essentiellement une température de pause de zone, qui correspond essentiellement à la température d'un objet (15) dans la zone de four respective (11-14) en fonctionnement normal en dehors de l'interruption de fonctionnement,
de telle sorte qu'après la reprise du fonctionnement normal après l'interruption de fonctionnement, aucune surchauffe essentielle des objets (15) au dessus de la température de processus Tp prédéterminée ne se produise.

19. Four de recuit continu à air chaud (1) selon la revendication 18, qui est conçu pour un procédé selon une des revendications 2 à 17.
